# EUROPÄISCHE PATENTANMELDUNG

(11) **EP 4 112 198 A1**
(43) Veröffentlichungstag der Anmeldung: **04.01.2023**
(21) Anmeldenummer: 22177740.2
(22) Anmeldetag: 08.06.2022
(51) Int. Cl.: B21B 15/00, B21C 47/24, B23K 20/06

(54) **BANDVERBINDUNGSVERFAHREN UND BANDVERBINDUNGSVORRICHTUNG FÜR EINE KONTINUIERLICH BETRIEBENE BANDBEHANDLUNGSVORRICHTUNG**

(30) Priorität: 02.07.2021 DE 102021206966
(71) Anmelder: SMS Group GmbH, 40237 Düsseldorf (DE)
(72) Erfinder: Daube, Thomas, 47279 Duisburg (DE); Szonn, Jens, 40591 Düsseldorf (DE); Wilms, Henning, 47239 Duisburg (DE); Kümmel, Lutz, 41363 Jüchen (DE)
(74) Vertreter: Klüppel, Walter

(57) **Zusammenfassung**

Die vorliegende Anmeldung betrifft ein Verfahren sowie eine Vorrichtung (1) zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, wobei die beiden Abschnitte (2, 4) in einer gemeinsamen horizontalen Ebene (E) zueinander beabstandet angeordnet sowie bezüglich ihrer Bandbreitenmittelachsen ausgerichtet werden oder umgekehrt; die beiden Metallbänder (3, 5) sodann positionsfest fixiert werden; und anschließend beide Abschnitte (2, 4) über zumindest eine metallische Verbindungslasche (19) mittels zumindest einer Spule (12) einer elektromagnetischen Pulsschweißeinrichtung (11) stoffschlüssig miteinander verbunden werden.

## Beschreibung

Die vorliegende Erfindung betrifft ein Verfahren zum Verbinden eines Endabschnitts eines auslaufenden Metallbandes mit einem Anfangsabschnitt eines einlaufenden Metallbandes in einer kontinuierlich betriebenen Bandbehandlungsanlage sowie eine Bandverbindungsvorrichtung, die vorzugsweise zur Durchführung des erfindungsgemäßen Verfahrens geeignet ist. Ferner betrifft die vorliegende Erfindung eine Bandbehandlungsanlage umfassend die Bandverbindungsvorrichtung.

In Bandbehandlungsanlagen werden zu Bunden aufgewickelte Metallbänder in einem Einlaufteil abgewickelt und durchlaufen anschließend eine oder mehrere Behandlungsstationen, bevor sie im Auslaufteil wieder aufgewickelt oder alternativ zu einzelnen Tafeln geschnitten werden. Damit die Metallbänder nicht stets neu eingefädelt werden müssen, wird ein Endabschnitt eines auslaufenden Metallbandes mit einem Anfangsabschnitt eines einlaufenden Metallbandes eines neuen Bundes verbunden.

Zum Verbinden der Metallbänder sind aus dem Stand der Technik diverse Verfahren bekannt. Gemäß der Offenbarung der europäischen Patentschrift EP 2 202 025 B1 können die Metallbänder mittels geeigneter Schweißmaschinen, mittels mechanischer Heftmaschinen oder adhäsiv miteinander verbunden werden.

Die derzeit am häufigsten verwendeten Verfahren sind das Fügen mittels mechanischer Heftmaschinen und das stoffschlüssige Verbinden mittels Laserschweißmaschinen.

Heftmaschinen weisen den Vorteil auf, dass auch Metallbänder aus unterschiedlichen Metallen und/oder Metalllegierungen miteinander verbunden werden können. Allerdings entstehen während des Stanzvorgangs scharfkantige Grate oder kleinere Flitterpartikel, die insbesondere an den Rollen der Prozesslinie einer Bandbehandlungsanlage haften bleiben können und zu einem erhöhten Verschleiß dieser führen. Des Weiteren können die scharfkantigen Grate oder kleineren Flitterpartikel Oberflächendefekte an den behandelnden Metallbändern verursachen.

Da die Metallbänder innerhalb einer Prozesslinie mehrfach umgeformt werden, besteht zudem die Gefahr eines Reißens der gebildeten Heftnaht, die zu einem langen Stillstand der entsprechenden Prozesslinie führen kann.

Weiterhin kann die Fahrweise von Prozesskomponenten im laufenden Prozess, wie Streckrichtern, eingeschränkt sein, weil der Bandzug in einer solchen Sektion kurzzeitig abgesenkt werden muss und somit die Biege- und Korrekturrollen kurzzeitig geöffnet werden müssen. Auch in einer Reinigungs- und/oder Passivierungssektion kann sich eine solche Heftnaht nachteilig auswirken, da diese auf die pneumatisch anstellbaren Abquetschrollen drücken kann.

Mittels der aus dem Stand der Technik bekannten Schweißverfahren, wie beispielsweise dem Laserschweißen, können in der Regel nur Stahlbänder miteinander verbunden werden. Die hierbei gebildeten Schweißnähte müssen aufwendig einer Wärmenachbehandlung unterzogen werden, wodurch Zyklusnebenzeiten erhöht werden.

Eine Verbindung zwischen Metallbändern aus unterschiedlichen Metallen, wie beispielsweise Aluminium und Stahl, ist nur stark eingeschränkt möglich, da die Schweißverbindungen in der Praxis häufig Schwierigkeiten verursachen. Neben einer Spritzerbildung besteht ferner die Gefahr eines Anhaftens der Elektrode an dem Metallband.

Der vorliegenden Erfindung liegt daher die Aufgabe zu Grunde ein gegenüber dem Stand der Technik verbessertes Verfahren zum Verbinden eines Endabschnitts eines auslaufenden Metallbandes mit einem Anfangsabschnitt eines einlaufenden Metallbandes bereitzustellen, insbesondere ein Verfahren bereitzustellen, welches ein gratfreies, sauberes und schnelles Verbinden des Endabschnitts eines auslaufenden Metallbandes mit einem Anfangsabschnitt eines einlaufenden Metallbandes in einer kontinuierlich betriebenen Bandbehandlungsanlage ermöglicht.

In einem weiteren Aspekt ist Aufgabe der vorliegenden Erfindung eine gegenüber dem Stand der Technik verbesserte Bandverbindungsvorrichtung zum Verbinden eines Endabschnitts eines auslaufenden Metallbandes mit einem Anfangsabschnitt eines einlaufenden Metallbandes in einer kontinuierlich betriebenen Bandbehandlungsanlage bereitzustellen.

### Beschreibung der Erfindung

Erfindungsgemäß wird die Aufgabe durch ein Verfahren mit den Merkmalen des Patentanspruchs 1 sowie durch eine Bandverbindungsvorrichtung mit den Merkmalen des Patentanspruchs 6 gelöst.

Gemäß den erfindungsgemäßen Verfahren zum Verbinden eines Endabschnitts eines auslaufenden Metallbandes mit einem Anfangsabschnitt eines einlaufenden Metallbandes in einer kontinuierlich betriebenen Bandbehandlungsanlage ist vorgesehen, dass die beiden Abschnitte zunächst in einer gemeinsamen horizontalen Ebene zueinander beabstandet angeordnet sowie bezüglich ihrer Bandbreitenmittelachsen ausgerichtet werden oder umgekehrt, also die beiden Abschnitte zunächst bezüglich ihrer Bandbreitenmittelachsen zueinander ausgerichtet werden und sodann in einer gemeinsamen horizontalen Ebene zueinander beabstandet werden. Sodann werden die beiden Metallbänder positionsfest fixiert werden; wobei anschließend beide Abschnitte über zumindest eine metallische Verbindungslasche mittels zumindest einer Spule einer elektromagnetischen Pulsschweißeinrichtung stoffschlüssig miteinander verbunden werden.

In gleicher Weise betrifft die vorliegende Erfindung zudem eine Bandverbindungsvorrichtung zum Verbinden eines Endabschnitts eines auslaufenden Metallbandes mit einem Anfangsabschnitt eines einlaufenden Metallbandes in einer kontinuierlich betriebenen Bandbehandlungsanlage. Die erfindungsgemäße Bandverbindungsvorrichtung umfasst eine erste Ablagefläche für das einlaufende Metallband sowie eine in Transportrichtung gegenüberliegend angeordnete zweite Ablagefläche für das auslaufende Metallband, wobei zumindest eine der beiden Ablageflächen vertikal, längs und/oder senkrecht zur Transportrichtung verstellbar, und/oder entlang zumindest einer dieser Achsen schwenkbar ist, derart, dass die beiden Abschnitte des jeweiligen Metallbandes in einer gemeinsamen horizontalen Ebene zueinander beabstandet anordenbar sind; eine Klemmeinrichtung zum Fixieren der beiden Metallbänder; sowie eine elektromagnetische Pulsschweißeinrichtung mit zumindest einer Spule, mittels der die beiden Abschnitte über eine metallische Verbindungslasche miteinander stoffschlüssig verbindbar sind.

Dieser Fügeprozess ist besonders dann vorteilhaft, wenn die beiden Metallbänder aufgrund ihrer Eigenschaften nur mit erheblichem Aufwand miteinander verbindbar sind, beispielsweise weil das Prozessfenster für diese Kombination zu schmal ist. Durch eine gezielte Materialauswahl der metallischen Verbindungslasche kann somit jede Materialkombination von Metallbändern miteinander verbunden werden. Eine Teilverbindung ist hierbei im Allgemeinen ausreichend, um die erforderlichen Züge in einer Bandbehandlungsanlage zu übertragen.

Das Fügen der beiden Metallbänder über die zumindest eine metallische Verbindungslasche mittels der zumindest einen Spule der elektromagnetischen Pulsschweißeinrichtung ermöglicht nicht nur sehr kurze Zykluszeiten von maximal 100 µs, vorzugsweise von maximal 50 µs, die von der Größe der zu bildenden Verbindung unabhängig sind, sondern zudem eine robuste sowie reproduzierbare stoffschlüssige Verbindung zwischen Metallbändern unterschiedlicher Dicken und/oder Breiten ohne die Bildung von Flitterpartikeln und/oder Graten. So kann hierdurch der Verschleiß von in einer Bandbehandlungsanlage verbauten Polyurethan-beschichteten Rollen signifikant reduziert werden. Dies führt in gleicher Weise zu weniger Oberflächenfehlern und somit zu einer höheren Produktqualität bei den innerhalb der Bandbehandlungsanlage behandelten Metallbändern. Da der Verschrottungsanteil hierdurch ebenfalls reduziert werden kann, kann der gesamte Prozess wirtschaftlicher gestaltet werden. Bei artgleichen Metallen tritt zudem kein thermischer Verzug auf.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die Metallbänder sind vorzugsweise ausgewählt aus der Reihe umfassend Stahlbänder, Aluminiumbänder und/oder Nichteisenmetall-basierte Bänder.

Bei dem stoffschlüssigen Verbinden der beiden Metallbänder mittels des Pulsschweißeinrichtung bzw. der zumindest einen Spule wird die Spule mit einem gepulsten Strom beaufschlagt, der in einem der beiden Metallbänder und/oder der metallischen Verbindungslasche, dem sog. Flyer, einen gegenläufigen Strom induziert. Hierbei stoßen sich der Spulenstrom und der Werkstückstrom ab, wodurch der Flyer beschleunigt wird und auf das sog. Target aufschlägt. Die erforderliche Energie für den geplanten Fügeprozess ergibt sich aus der Dicke, der Breite sowie der Streckgrenze der Metallbänder bzw. der metallischen Verbindungslasche, der Schweißbreite und einem Faktor C, der einen Wert im Bereich von 500 bis 1500 aufweist. Die hierbei erzielte Geschwindigkeit des zu beschleunigenden Materials beträgt bis zu 800 m/s. Bei diesem Aufprall entstehen im Kollisionsbereich extrem hohe mechanische Spannungen und Dehnungen, welche zu einem Abplatzen von Oxidschichten und oberflächlichen Verschmutzungen führen. Aus dem sich schließenden Spalt zwischen beiden Fügepartnern werden die Verschmutzungen herausgetragen und es verbleiben metallisch reine, hoch reaktive Oberflächen. Diese werden unter einem enormen Druck des Aufpralls derart stark aufeinandergepresst, dass sich die Atome beider Fügepartner nahe genug kommen und eine metallische Bindung entsteht.

Die metallische Verbindungslasche kann grundsätzlich manuell in die Bandverbindungsvorrichtung eingesetzt werden. Bevorzugt ist jedoch eine automatische Zuführung vorgesehen.

Sofern sich die Banddicken der beiden Metallbänder unterscheiden, werden die beiden Abschnitte vorzugsweise derart in der Höhe ausgerichtet, dass die Verbindungslaschen-seitigen Bandoberflächen sich auf einer gemeinsamen horizontalen Höhe bzw. Ebene befinden.

Das Verbinden der metallischen Verbindungslasche mit den beiden Metallbändern kann in einem Schritt oder alternativ in zwei zeitlich voneinander getrennten Schritten erfolgen. Im letzteren Fall wird die Verbindungslasche vorzugsweise zuerst an das auslaufende Metallband gefügt. Anschließend wird die Verbindungslasche mittels eines zweiten Fügevorgangs an das einlaufende Metallband gefügt. Der zweistufige Prozess ist auch umgekehrt möglich.

Die metallische Verbindungslasche kann neben einer einteiligen Ausführung auch aus mehreren Teilstücken gebildet sein, die sich vorzugsweise über die Bandbreite eines der beiden Metallbänder, besonders bevorzugt des jeweils schmaleren Metallbandes, erstrecken. Diese können gleichzeitig oder nacheinander an die jeweiligen Abschnitte der Metallbänder gefügt werden.

Um die Belastung der metallischen Verbindungslasche möglichst zu minimieren, werden die beiden Metallbänder nicht auf Stoß, sondern mit einem definierten Abstand zueinander angeordnet. Vorteilhafterweise werden die in der gemeinsamen horizontalen Ebene zueinander beabstandeten Abschnitte daher bis zu einem axialen Abstand von 10 mm mit einem Abstand von maximal dem 15-fachen der maximalen Dicke eines der beiden Metallbänder, mehr bevorzugt mit einem Abstand von maximal dem 12-fachen der maximalen Dicke eines der beiden Metallbänder, noch mehr bevorzugt mit einem Abstand von maximal dem 9-fachen der maximalen Dicke eines der beiden Metallbänder, zueinander angeordnet.

Hinsichtlich des zu bildenden Überlappungsabschnitts zwischen der metallischen Verbindungslasche mit jedem der beiden Metallbänder ist vorteilhafterweise vorgesehen, dass jeder der beiden Überlappungsabschnitte eine Mindestfläche aufweist, die sich aus der Bandbreite eines der beiden Metallbänder, bevorzugt dem schmaleren Metallband, und dem zumindest 1.0-fachen der Banddicke eines der beiden Metallbänder, mehr bevorzugt dem zumindest 1.3-fachen der Banddicke eines der beiden Metallbänder, noch mehr bevorzugt dem zumindest 1.5-fachen der Banddicke eines der beiden Metallbänder, aufweist.

In einer bevorzugten Ausführungsvariante wird jeder der beiden Überlappungsabschnitte mit dem jeweiligen Metallband vollflächig verbunden. Hierdurch müssen überstehende Bereich nicht nachträglich entfernt werden, wodurch der Prozess in der Bandbehandlungsanlage zeitlich optimiert werden kann.

Die Banddicke der metallischen Verbindungslasche sollte vorteilhafterweise derart gewählt werden, dass diese im Bereich des 0.5-fachen bis 1.0-fachen der Banddicke eines der beiden Metallbänder, mehr bevorzugt im Bereich des 0.6-fachen bis 0.9-fachen der Banddicke eines der beiden Metallbänder, noch mehr bevorzugt im Bereich des 0.65-fachen bis 0.80-fachen der Banddicke eines der beiden Metallbänder, liegt.

Sofern die beiden Abschnitte eine undefinierte Form haben, können diese vorab getrimmt werden, um eine definierte Kante zu erzeugen. Das Trimmen kann in der Bandverbindungsvorrichtung oder in einer separaten Einrichtung erfolgen.

Damit der zu beschleunigende Abschnitt des Metallbandes und/oder die metallische Verbindungslasche, der sog. Flyer, die für den Fügeprozess erforderliche Aufprallgeschwindigkeit erfährt, sollte der vertikale Abstand zwischen dem Metallband und der metallischen Verbindungslasche 100 µm bis 3000 µm, bevorzugt 200 µm bis 2000 µm, noch mehr bevorzugt 300 µm bis 1500 µm betragen. Besonders bevorzugt ist in diesem Zusammenhang vorgesehen, dass der Kollisionswinkel maximal 40° beträgt.

Um einen solchen Abstand zwischen dem Metallband und der metallischen Verbindungslasche zu gewährleisten, können ggf. zusätzliche Sicken in das Metallband und/oder in die metallische Verbindungslasche vor dem Ausrichten eingeprägt werden. Diese können beispielsweise mit einem zusätzlichen Stanzwerkzeug oder vorteilhafterweise während eines Trimmprozesses erzeugt werden.

Die Pulsschweißeinrichtung der erfindungsgemäßen Bandverbindungsvorrichtung umfasst neben der zumindest einen Spule eine elektrische Energiequelle, wie eine Kondensatorbank, sowie einen Gegenhalter, über den das jeweils nicht beschleunigte Metallband und/oder die nicht beschleunigte metallische Verbindungslasche, das sog. Target, während des Fügeprozesses abstützbar ist. Die zumindest eine Spule kann daher oberhalb eines Endabschnittes der ersten Ablagefläche angeordnet sein, wobei diese hierbei die Funktion des Gegenhalters erfüllt.

In einer alternativen Ausführungsvariante kann die zumindest eine Spule oberhalb oder unterhalb einer Transportebene des Metallbandes in einem zwischen den beiden Ablageflächen angeordneten Raum positioniert sein. Der Gegenhalter ist sodann unterhalb oder oberhalb der Transportebene und in einer Flucht zu der zumindest einen Spule angeordnet.

Die zumindest eine Spule und/oder der entsprechende Gegenhalter kann stationär innerhalb der Bandverbindungsvorrichtung angeordnet sein und sich über einen quer zur Transportrichtung erstreckenden Abschnitt oder über die gesamte Bandbreite erstrecken. Vorzugsweise ist jedoch vorgesehen, dass die zumindest eine Spule und/oder der entsprechende Gegenhalter vertikal und/oder senkrecht zur Transportrichtung verstellbar, insbesondere verfahrbar sind. So kann der Fügeprozess beispielsweise in beliebig viele Segmente unterteilt werden.

In einer weiteren bevorzugten Ausführungsvariante umfasst die elektromagnetische Pulsschweißeinrichtung zumindest zwei, mehr bevorzugt eine Mehrzahl von Spulen, die senkrecht zur Transportrichtung nebeneinander angeordnet sind. Diese können ebenfalls vertikal und/oder senkrecht zur Transportrichtung verstellbar, insbesondere verfahrbar ausgeführt sein. Die sequentielle Anordnung erlaubt eine größere Flexibilität, da durch ein selektives Zu- und Abschalten der einzelnen Spulen unterschiedliche breite Metallbänder über ihre gesamte Bandbreite mittels der zumindest einen metallischen Verbindungslasche miteinander verbindbar sind.

Da nicht immer gewährleistet werden kann, dass bei dem vorliegenden Fügeprozess eine gleichmäßige und eine sich über die gesamte Bandbreite erstreckende Verbindung entsteht, besteht insbesondere an den Bandkanten die Gefahr einer Rissbildung. Um dies zu verhindern, ist vorteilhafterweise vorgesehen, dass die Bandkanten während oder nach dem Fügeprozesses ausgestanzt werden. Dies kann innerhalb der Bandverbindungsvorrichtung über die Pulsschweißeinrichtung direkt oder mit einer klassischen Stanzeinrichtung durchgeführt werden.

Die Klemmeinrichtung kann als Vakuumeinrichtung, Magneteinrichtung, als Niederhalter und/oder als Klemmbackenvorrichtung ausgebildet sein.

In einem weiteren Aspekt betrifft die vorliegende Erfindung zudem eine Bandbehandlungsanlage, umfassend zumindest eine in einer Einlaufsektion angeordnete erfindungsgemäße Bandverbindungsvorrichtung.

### Figurenbeschreibung

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: eine Ausführungsvariante der erfindungsgemäßen Bandverbindungsvorrichtung,
- Fig. 2: eine Darstellung einer Klemmbackenvorrichtung,
- Fig. 3a / 3b: einen zwei-stufigen Fügeprozess,
- Fig. 4: eine Ausführungsvariante einer Verbindung zwischen zwei Metallbändern,
- Fig. 5- 8: unterschiedliche Ausführungsvarianten einer Anordnung von Spule und Gegenhalter,
- Fig. 9: eine Aufnahme einer stoffschlüssigen Verbindung zwischen zwei Aluminiumbändern.

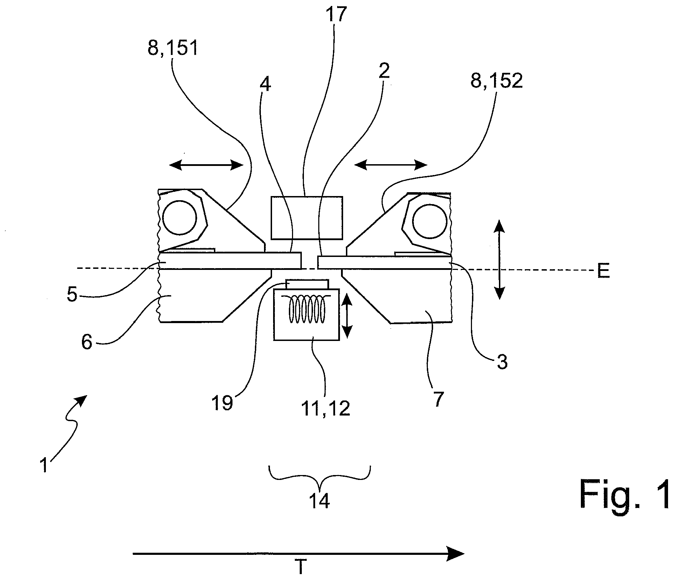

In Figur 1 ist eine Ausführungsvariante der erfindungsgemäßen Bandverbindungsvorrichtung 1 gezeigt, mit der ein Endabschnitt 2 eines auslaufenden Metallbandes 3, beispielsweise ein beschichtetes Aluminiumband, mit einem Anfangsabschnitt 4 eines einlaufenden Metallbandes 5, das beispielhaft ebenfalls ein Aluminiumband sein kann, verbindbar ist. Das einlaufende Metallband 5 kann, wie dargestellt, dicker sein. Eine solche Bandverbindungsvorrichtung 1 ist für eine kontinuierlich betriebene Bandbehandlungsanlage (nicht dargestellt) vorgesehen, wo diese beispielsweise in einer Einlaufsektion angeordnet sein kann.

Die Bandverbindungsvorrichtung 1 umfasst in der gezeigten Ausführungsvariante eine erste Ablagefläche 6, beispielsweise einen Tisch, für das einlaufende Metallband 5 sowie eine in Transportrichtung gegenüberliegend angeordnete zweite Ablagefläche 7, beispielsweise einen Tisch, für das auslaufende Metallband 3, die vorliegend über einen nicht dargestellten Stellantrieb höhenverstellbar ausgeführt ist, derart, dass die beiden Abschnitte 2, 4 der Metallbänder 3, 5 in einer gemeinsamen horizontalen Ebene (E) zueinander beabstandet angeordnet werden können.

Ferner umfasst die Bandverbindungsvorrichtung 1 eine Klemmeinrichtung 8 zum Fixieren der beiden Metallbänder 3, 5, sobald sich diese in einer für den geplanten Verbindungsprozess vorgesehenen Position befinden. Hierzu werden die beiden Abschnitte 2, 4 zunächst in einer gemeinsamen horizontalen Ebene (E) zueinander beabstandet angeordnet sowie bezüglich ihrer Bandbreitenmittelachsen ausgerichtet. Anschließend werden die beiden Metallbänder 3, 5 mittels der Klemmeinrichtung 8 positionsfest fixiert. Hierzu umfasst die Klemmeinrichtung 8 in der vorliegend dargestellten Ausführungsvariante eine erste sowie eine zweite Klemmbacke 151, 152 mit denen die beiden aufeinander ausgerichteten Metallbänder 3, 5 positionsfest fixiert werden. Alternativ kann die Klemmeinrichtung 8 aus einer Vakuumeinrichtung oder einer Magneteinrichtung ausgebildet sein, die an und/oder in der jeweiligen Ablagefläche bzw. dem jeweiligen Tisch 6, 7 angeordnet ist (nicht dargestellt).

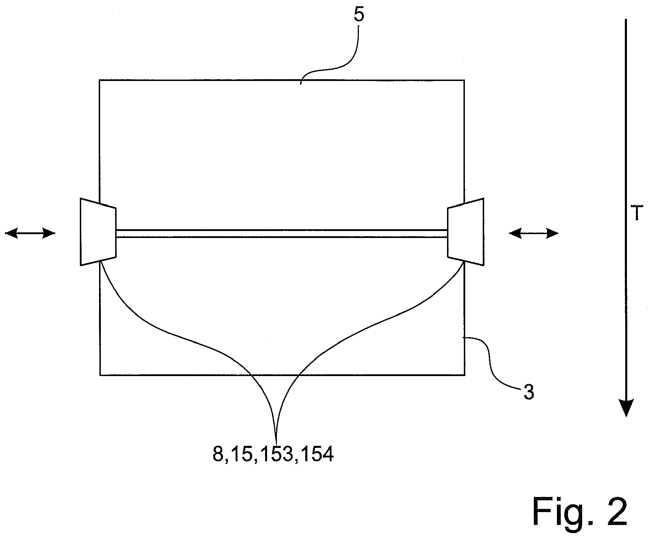

Des Weiteren umfasst die Bandverbindungsvorrichtung 1 eine elektromagnetische Pulsschweißeinrichtung 11 mit einer höhenverstellbar angeordneten Spule 12, die zwischen den beiden Tischen 6, 7 in einem Raum 14 unterhalb der Transportebene E angeordnet ist und über die die beiden Abschnitte 2, 4 mittels einer metallischen Verbindungslasche 19 stoffschlüssig miteinander verbindbar sind. Zur Durchführung des Fügeprozesses zwischen den beiden Abschnitten 2, 4 wird die Spule 12 mit der metallischen Verbindungslasche 19 bis zu einem definierten vertikalen Abstand an die beiden Abschnitte 2, 4 herangefahren. Sodann wird der Gegenhalter 17 an die beiden Abschnitte 2, 4 angestellt und die Spule 12 mit einem gepulsten Strom beaufschlagt, der in der metallischen Verbindungslasche 19 einen gegenläufigen Strom induziert. Hierdurch wird die Verbindungslasche 19 gezielt auf die beiden zueinander beabstandeten und in einer gemeinsamen horizontalen Ebene angeordneten Abschnitte 2, 4 beschleunigt, derart, dass bei diesem Aufprall eine metallische Bindung entsteht. Zur Ausrichtung der beiden Metallbänder 3, 5 bzw. der beiden Abschnitte 2, 4 hinsichtlich ihrer Bandbreitenmittelachse können alternativ und/oder ergänzend zu der in Figur 1 gezeigten Ausführungsvariante seitliche Klemmbacken 153, 154 verwendet werden, die quer zur Transportrichtung T verfahrbar sind (Fig. 2).

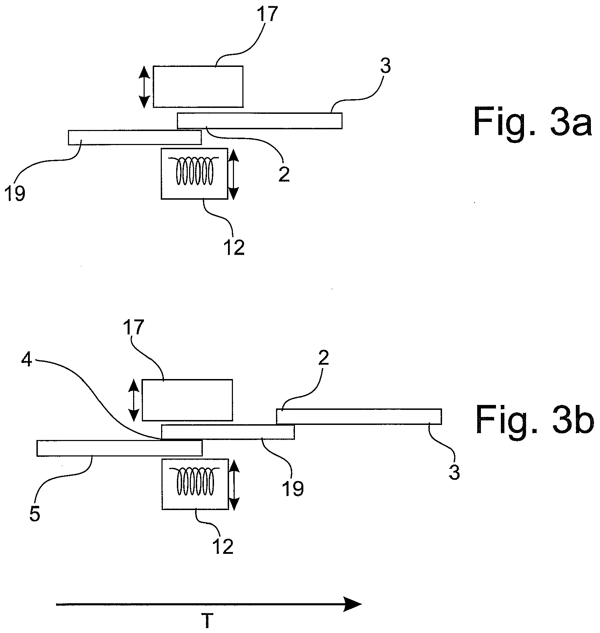

In einer weiteren Ausführungsvariante, wie diese in den Figuren 3a und 3b gezeigt ist, kann die metallische Verbindungslasche 19 in einem zweistufigen Prozess mit den beiden Metallbändern 3, 5 stoffschlüssig verbunden werden. Hierzu wird die metallische Verbindungslasche 19 zunächst mit dem auslaufenden Metallband 3 und anschließend mit dem einlaufenden Metallband 5 stoffschlüssig verbunden.

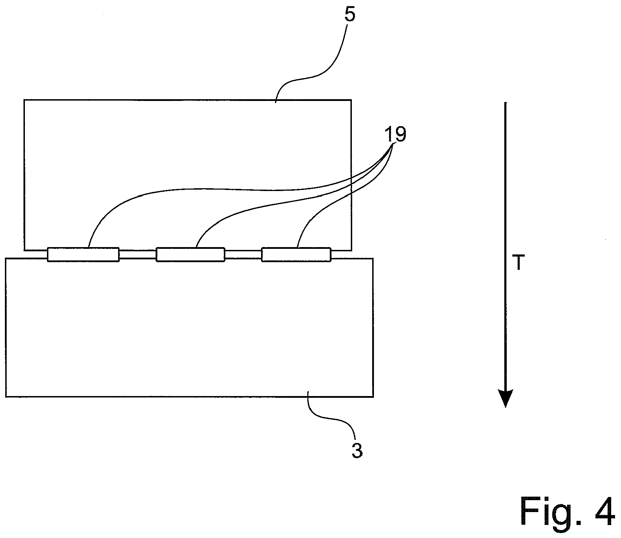

Zur Durchführung des Fügeprozesses kann grundsätzlich eine einzige metallische Verbindungslasche 19 eingesetzt werden, die sich über zumindest einen Bereich entlang der Bandbreite erstreckt. Alternativ und/oder ergänzend können auch zwei oder mehr solcher metallischen Verbindungslaschen 19 verwendet werden, um die beiden Metallbänder 3, 5 miteinander zu verbinden (Fig. 4).

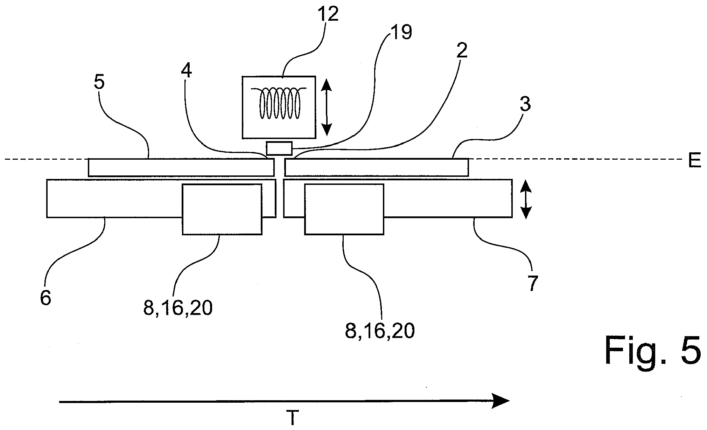

In den nachfolgenden Figuren 5 bis 8 sind weitere mögliche Ausführungsvarianten der erfindungsgemäßen Bandverbindungsvorrichtung 1 bzw. des Fügeprozesses gezeigt.

In Figur 5 umfasst die Bandverbindungsvorrichtung 1 eine erste stationär angeordnete Ablagefläche 6 sowie eine höhenverstellbar ausgebildete zweite Ablagefläche 7, die axial gegenüberliegend in einem spezifischen Abstand angeordnet ist. Beide Ablageflächen 6, 7 weisen an ihren beiden einander gegenüberliegenden distalen Enden jeweils eine Klemmeinrichtung 8 auf, die als Vakuumeinrichtung 16 oder als Magneteinrichtung 20 ausgebildet sein kann. Oberhalb der Transportebene E umfasst die Bandverbindungsvorrichtung 1 eine höhenverstellbare Spule 12, die derart angeordnet, dass die metallische Verbindungslasche 19 überlappend mit den beiden Abschnitten 2, 4 stoffschlüssig verbindbar ist.

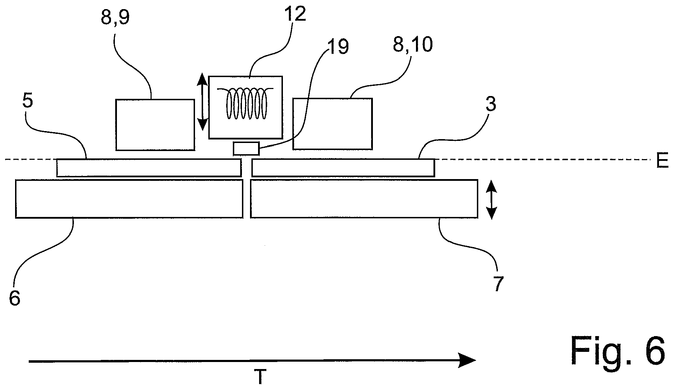

In Figur 6 umfasst die Bandverbindungsvorrichtung 1 eine erste stationär angeordnete Ablagefläche 6 sowie eine höhenverstellbar ausgebildete zweite Ablagefläche 7, die axial gegenüberliegend in einem spezifischen Abstand angeordnet ist. Oberhalb der Transportebene E umfasst die Bandverbindungsvorrichtung 1 eine höhenverstellbare Spule 12, die derart angeordnet, dass die metallische Verbindungslasche 19 überlappend mit den beiden Abschnitten 2, 4 stoffschlüssig verbindbar ist. Als Klemmeinrichtung 8 sind zwei höhenverstellbare Niederhalter 9, 10 vorgesehen, die jeweils in Transportrichtung T vor und hinter der Spule 12 angeordnet sind.

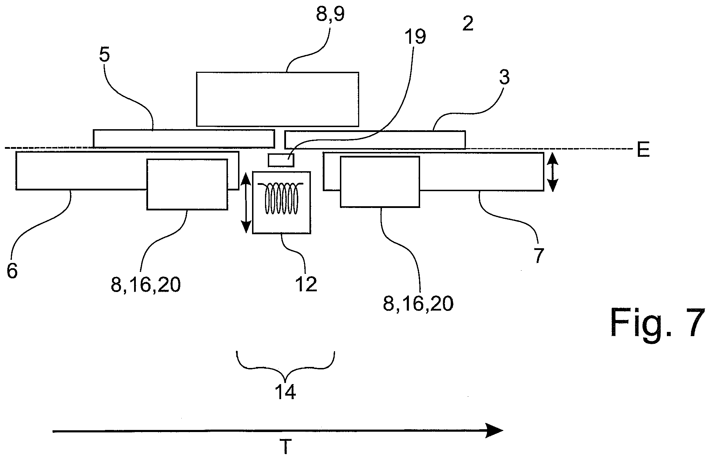

In Figur 7 umfasst die Bandverbindungsvorrichtung 1 eine erste stationär angeordnete Ablagefläche 6 sowie eine axial gegenüberliegend angeordnete, höhenverstellbar ausgebildete zweite Ablagefläche 7. Zwischen beiden Ablageflächen 6, 7 ist ebenfalls ein Raum 14 vorgesehen, in dem eine höhenverstellbare Spule 12 angeordnet ist, über die die metallische Verbindungslasche 19 überlappend mit den beiden Abschnitten 2, 4 stoffschlüssig verbindbar ist. An ihren beiden einander gegenüberliegenden distalen Enden weist jede der beiden Ablageflächen 6, 7 jeweils eine Klemmeinrichtung 8 auf, die als Vakuumeinrichtung 16 oder als Magneteinrichtung 20 ausgebildet sein kann. Oberhalb der Transportebene E umfasst die Bandverbindungsvorrichtung 1 eine stationär angeordnete sowie in Form eines Niederhalters 9 ausgebildete Klemmeinrichtung 8 auf.

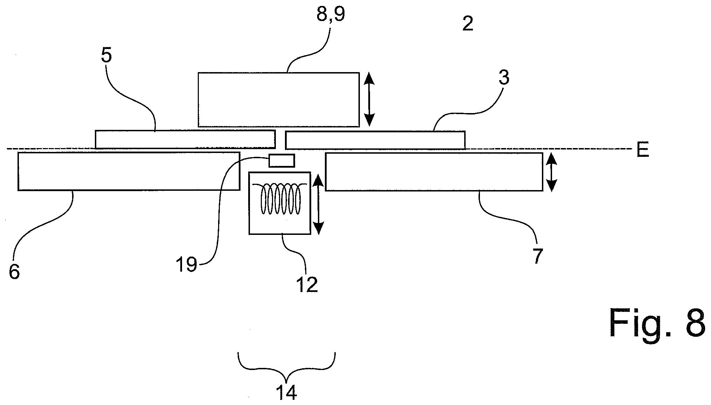

In Figur 8 umfasst die Bandverbindungsvorrichtung 1 eine erste stationär angeordnete Ablagefläche 6 sowie eine axial gegenüberliegend angeordnete, höhenverstellbar ausgebildete zweite Ablagefläche 7. Zwischen beiden Ablageflächen 6, 7 ist ein Raum 14 vorgesehen, in dem eine höhenverstellbare Spule 12 angeordnet ist, über die die metallische Verbindungslasche 19 überlappend mit den beiden Abschnitten 2, 4 stoffschlüssig verbindbar ist. Im Gegensatz zu der Ausführungsvariante in Figur 6 umfasst die Bandverbindungsvorrichtung 1 nur eine oberhalb der Transportebene E angeordnete sowie in Form eines höhenverstellbaren Niederhalters 9 ausgebildete Klemmeinrichtung 8 auf.

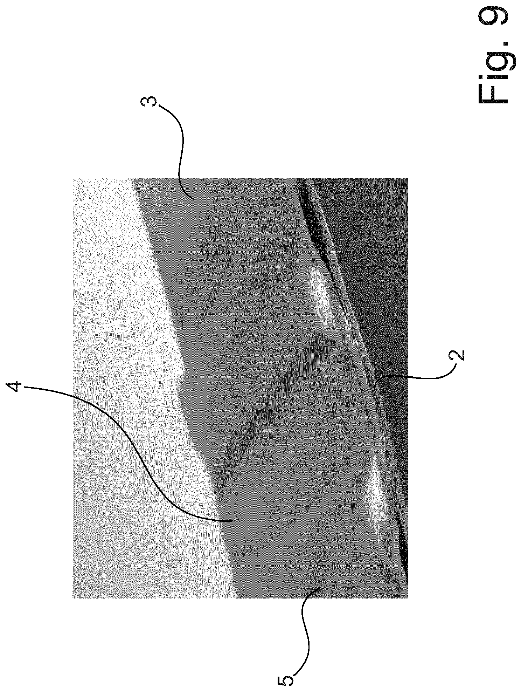

In Figur 9 ist beispielhaft eine Aufnahme eines Fügeprozesses dargestellt. Hierzu wurden zwei Aluminiumstreifen mit einer Dicke von jeweils 500 µm in einer erfindungsgemäßen Bandverbindungsvorrichtung 1 miteinander verbunden. Der verwendete Pulsgenerator (BlueWave PS64-16) hat eine maximale Ladespannung von 16 kV und eine maximale Ladeenergie von 64 kJ. Die Spule (BS100-15) hat einen wirksamen Längenbereich von 100 mm und eine Leiterbreite von 15 mm. Für die Schweißung wurde ein Spitzenstrom von 384 kA und eine Ladeenergie von 14 kJ genutzt. Der Abstand zwischen beiden Aluminiumstreifen betrug 1 mm, die Überlappung hatte eine axiale Erstreckung von ca. 15 mm. Die Probe wies eine Zugfestigkeit (Rm) von 186,25 MPa.

### Bezugszeichenliste

- 1: Bandverbindungsvorrichtung
- 2: Endabschnitt
- 3: auslaufende Metallband
- 4: Anfangsabschnitt
- 5: einlaufende Metallband
- 6: erste Ablagefläche / Tisch
- 7: zweite Ablagefläche / Tisch
- 8: Klemmeinrichtung
- 9: ersten Niederhalter
- 10: zweiten Niederhalter
- 11: Pulsschweißgerät
- 12: Spule
- 13: Bereich
- 14: Raum
- 15: Klemmbackenvorrichtung
- 151: Klemmbacke
- 152: Klemmbacke
- 153: seitliche Klemmbacke
- 154: seitlicher Klemmbacke
- 16: Vakuumeinrichtung
- 17: Gegenhalter
- 18: Spulenanordnung
- 19: metallische Verbindungslasche
- 20: Magneteinrichtung
- A: Abstand
- T: Transportrichtung
- E: Transportebene

## Patentansprüche

1. Verfahren zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, wobei die beiden Abschnitte (2, 4) in einer gemeinsamen horizontalen Ebene (E) zueinander beabstandet angeordnet sowie bezüglich ihrer Bandbreitenmittelachsen ausgerichtet werden oder umgekehrt; die beiden Metallbänder (3, 5) sodann positionsfest fixiert werden; und anschließend beide Abschnitte (2, 4) über zumindest eine metallische Verbindungslasche (19) mittels zumindest einer Spule (12) einer elektromagnetischen Pulsschweißeinrichtung (11) stoffschlüssig miteinander verbunden werden.

2. Verfahren nach Anspruch 1, wobei die in der gemeinsamen horizontalen Ebene (E) axial zueinander beabstandeten Abschnitte (2, 4) bis zu einem Abstand von 10 mm mit einem Abstand von maximal dem 15-fachen der maximalen Banddicke eines der beiden Metallbänder (3, 5), vorzugsweise mit einem Abstand von maximal dem 12-fachen der maximalen Banddicke eines der beiden Metallbänder (3, 5), mehr bevorzugt mit einem Abstand von maximal dem 9-fachen der maximalen Banddicke eines der beiden Metallbänder (3, 5), zueinander angeordnet werden.

3. Verfahren nach Anspruch 1 oder 2, wobei die metallische Verbindungslasche (19) mit jedem der beiden Metallbänder (3, 5) über einen Überlappungsabschnitt stoffschlüssig verbunden wird, wobei jeder der beiden Überlappungsabschnitte eine Mindestfläche aufweist, die sich aus der Bandbreite eines der beiden Metallbänder (3, 5), vorzugsweise dem schmaleren Metallband (3, 5), und dem zumindest 1.0-fachen der Banddicke eines der beiden Metallbänder (3, 5) ergibt.

4. Verfahren nach einem der vorhergehenden Ansprüche, wobei jeder der beiden Überlappungsabschnitte mit dem jeweiligen Metallband (3, 5) vollflächig verbunden wird.

5. Verfahren nach einem der vorhergehenden Ansprüche, wobei die metallische Verbindungslasche (19) eine Dicke im Bereich des 0.5-fachen bis 1.0-fachen der Banddicke eines der beiden Metallbänder (3, 5), vorzugsweise eine Dicke im Bereich des 0.6-fachen bis 0.9-fachen der Banddicke eines der beiden Metallbänder (3, 5), mehr bevorzugt eine Dicke im Bereich des 0.65-fachen bis 0.80-fachen der Banddicke eines der beiden Metallbänder (3, 5), aufweist.

6. Bandverbindungsvorrichtung (1) zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, umfassend eine erste Ablagefläche (6) für das einlaufende Metallband (5) sowie eine in Transportrichtung gegenüberliegend angeordnete zweite Ablagefläche (7) für das auslaufende Metallband (3), wobei zumindest eine der beiden Ablageflächen (6, 7) vertikal, längs und/oder senkrecht zur Transportrichtung (T) verstellbar, und/oder entlang zumindest einer dieser Achsen schwenkbar ist, derart, dass die beiden Abschnitte (2, 4) des jeweiligen Metallbandes (3, 5) in einer gemeinsamen horizontalen Ebene (E) zueinander beabstandet anordenbar sind; eine Klemmeinrichtung (8) zum Fixieren der beiden Metallbänder (3, 5); sowie eine elektromagnetisches Pulsschweißeinrichtung (11) mit zumindest einer Spule (12), mittels der die beiden Abschnitte (2, 4) über eine metallische Verbindungslasche (19) miteinander stoffschlüssig verbindbar sind.

7. Bandverbindungsvorrichtung (1) nach Anspruch 6, wobei die zumindest eine Spule (12) oberhalb und/oder unterhalb einer Transportebene (T) des Metallbandes (3, 5) in einem zwischen den beiden Ablageflächen (6, 7) angeordneten Raum (14) positioniert ist.

8. Bandverbindungsvorrichtung (1) nach Anspruch 6 oder 7, wobei die zumindest eine Spule (12) vertikal und/oder senkrecht zur Transportrichtung (T) verstellbar ist.

9. Bandverbindungsvorrichtung (1) nach einem der vorhergehenden Ansprüche 6 bis 8, wobei die elektromagnetische Pulsschweißeinrichtung (11) zumindest zwei, vorzugsweise eine Mehrzahl von Spulen (12) umfasst, die senkrecht zur Transportrichtung (T) nebeneinander angeordnet sind.

10. Bandverbindungsvorrichtung (1) nach einem der vorhergehenden Ansprüche 6 bis 9, wobei die Klemmeinrichtung (8) als Vakuumeinrichtung (16), Magneteinrichtung (20), als Niederhalter (9, 10) und/oder als Klemmbackenvorrichtung (15) ausgebildet ist.

11. Bandbehandlungsanlage, umfassend eine in einer Einlaufsektion angeordnete Bandverbindungsvorrichtung (1) nach einem der vorhergehenden Ansprüche 6 bis 10.
